# EUROPEAN PATENT SPECIFICATION

(11) **EP 1 693 915 B1**
(45) Date of publication and mention of the grant of the patent: **23.09.2009**
(21) Application number: 06000249.0
(22) Date of filing: 07.01.2006
(51) Int. Cl.: H01M 8/02, H01M 8/24

(54) **Seal structure for fuel cell**
Dichtungsanordnung für Brennstoffzelle
Structure de joint pour pile à combustible

(30) Priority: 18.02.2005 JP 2005041671
(43) Date of publication of application: 23.08.2006
(73) Proprietor: Carl Freudenberg KG, 69469 Weinheim (DE)
(72) Inventor: Koga, Shotaro c/o NOK Corporation, Fujisawa-shi Kanagawa 251-0042 (JP); Kurano, Yoshihiro c/o NOK Corporation, Fujisawa-shi Kanagawa 251-0042 (JP); Okabe, Tatsuya c/o NOK Corporation, Fujisawa-shi Kanagawa 251-0042 (JP)

(56) References cited:
- EP-A- 1 220 345
- WO-A-20/04114451
- US-A1- 2002 150 810
- US-A1- 2003 118 889
- PATENT ABSTRACTS OF JAPAN vol. 2003, no. 12, 5 December 2003 (2003-12-05) & JP 2005 327514 A (NOK CORP), 24 November 2005 (2005-11-24)

## Description

### BACKGROUND OF THE INVENTION

### Field of the Invention

The present invention relates to a seal structure body forming a constituting element of a fuel battery cell.

### Description of the Related Art

A seal structure body for a gas flow path of each of cells within a fuel battery stack is roughly classified into a structure in which a gasket constituted by a rubber-like elastic body is formed on a front surface of a separator, and a structure in which the gasket constituted by the rubber-like elastic body is integrally formed with an MEA.

In the latter structure in which the gasket is integrally formed with the MEA, the gasket is structured by an impregnation layer in which the rubber-like elastic body and the MEA are integrally formed, and an elastic body layer applying a seal function, and a long-term durability of the seal function is generally secured by forming a convex-shaped seal lip on a front surface of the elastic body layer.

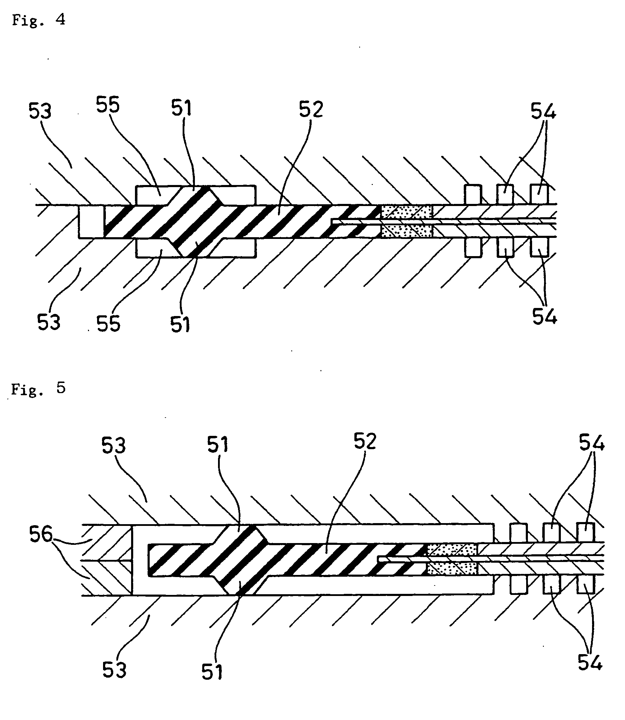

However, as shown in Fig. 4, in the case that only a seal lip 51 required for the seal function is formed on a surface of an elastic body layer 52, it is necessary to control a compression rate of the seal lip 51 by a cross sectional shape of the separator 53 corresponding to a sealed member. Accordingly, since the cross sectional shape of the plate is complicated, there is a disadvantage that it is hard to make the separator 53 thin. In this case, it is necessary to precisely process a concave portion 55 for bringing the seal lip 51 into close contact with a bottom surface position for controlling the compression rate of the seal lip 51, in addition to a groove-shaped concave portion 54 forming a gas flow path, on an inner surface of the separator 53.

On the other hand, as shown in Fig. 5, there can be considered a structure that the compression rate of the seal lip 51 is controlled by interposing a spacer 56 made of a different material between a pair of separators 53. However, in this case, it is necessary to prepare a special spacer 56, and a complicated adhering step for fixing the spacer 54 to the separator 53 is necessary. Further, since no support is provided in both right and left sides of the seal lip 51, there is a risk that a lip collapse is generated at a time of compressing the gasket.

In this case, the applicant of the present invention has previously proposed a gasket for a fuel battery described in Japanese Unexamined Patent Publication No. 2003-157867, however, the gasket in accordance with the prior art is arranged in both sides (both surface sides) of an electrolyte membrane of the MEA, and is not arranged in an outer peripheral side of the MEA as in the present invention.

WO 2004/114451 A1 discloses a sealed and gasketed membrane electrode assembly having several gasketing members. US 2003/0118889 A1 discloses a structural seal for a fuel cell having a layer of adhesive.

### SUMMARY OF THE INVENTION

Taking the points mentioned above into consideration, an object of the present invention is to provide a seal structure body for a fuel battery in which the seal structure body constituted by a rubber-like elastic body has a function of self-controlling a compression rate of a seal lip, thereby simplifying a cross sectional shape of a separator so as to enable to make the separator thin, and it is not necessary to prepare any special spacer.

In order to achieve the object mentioned above, in accordance with the present invention, there is provided a seal structure body for a fuel battery, the seal structure body being arranged in an outer peripheral side of an MEA constructing a fuel battery cell, sealing between a pair of separators and made of a rubber-like elastic body, and the seal structure body being integrally formed with the MEA by impregnating a part of the rubber-like elastic body in a peripheral edge portion of a gas diffusion layer constructing the MEA, characterized in that a seal lip closely contacted with the separator so as to achieve a seal function is provided, and a sizing stop portion defining an interval between a pair of separators at a time of assembling a stack is integrally formed in at least one or both of an inner peripheral side and an outer peripheral side of the seal lip.

Since the seal structure body in accordance with the present invention provided with the structure mentioned above has the unique fixed sizing stop portion made of the rubber-like elastic body as a part thereof, and the fixed sizing stop portion is pinched between a pair of separators at a time of the stack assembly so as to receive a compression load, the seal structure body can define the interval between the separators. Accordingly, the fixed sizing stop portion defines the interval between the separators, whereby the compression rate of the seal lip is controlled.

In this case, the long-term durability of the seal function is required in the seal lip, a shape generating a high surface pressure at a time of compression is required in the seal lip. Accordingly, it is important to make a cross section of a leading end of the lip in a sharp shape and to set a height of the lip higher than the fixed sizing stop portion. Further, the fixed sizing stop portion is required to control such that the seal lip achieves a desired compression rate, that is, a desired height with respect to a compression load, and it is desirable that a shape generating no deformation with respect to the compression load is necessary. Accordingly, it is important to form a leading end of the position in a flat shape, and to set a height thereof lower than the seal lip.

Further, in the case that a high-level control of the compression rate is required, it is desirable to arrange the fixed sizing stop portion in both sides (the inner peripheral side and the outer peripheral side) of the seal lip in such a manner that lip lines are in parallel to each other. Further, it is possible not only to control the compression rate but also to suppress the lip collapse at a time of compressing the gasket, by setting an interval between the seal lip and the fixed sizing stop portion small.

The present invention achieves the following effects.
In other words, in the seal structure body in accordance with the present invention provided with the structure mentioned above, since the fixed sizing stop portion defining the interval between a pair of separators at a time of the stack assembly is integrally formed at least in one or both of the inner peripheral side and the outer peripheral side of the seal lip brought into contact with the separator, the fixed sizing stop portion is pinched between a pair of separators so as to define the interval between the separators, whereby it is possible to self-control the compression rate of the seal lip. Accordingly, since it is not necessary to control the compression rate of the seal lip by complicating the cross sectional shape of the separator, it is possible to simplify the cross sectional shape of the separator so as to achieve the thin structure. It is extremely useful for a downsizing and a weight saving of the fuel battery stack to make the separator thin. Further, since it is not necessary to prepare the special spacer, the number of the parts is not increased, and it is not necessary to execute a complicated parts adhering step. Further, since the fixed sizing stop portion is provided just adjacent to the seal lip, it is possible to inhibit the lip collapse from being generated.

### BRIEF DESCRIPTION OF THE DRAWINGS

Fig. 1 is a cross sectional view of a main portion of a fuel battery cell provided with a seal structure body in accordance with an embodiment of the present invention (before assembling a stack);
Fig. 2 is a cross sectional view of a main portion of the fuel battery cell (after assembling the stack);
Fig. 3 is a cross sectional view of a main portion of a fuel battery cell provided with a seal structure body in accordance with a prior art;
Fig. 4 is a cross sectional view of a main portion of a fuel battery cell provided with a seal structure body in accordance with a prior art; and
Fig. 5 is a cross sectional view of a main portion of a fuel battery cell provided with a seal structure body in accordance with the other prior art.

### DESCRIPTION OF THE PREFERRED EMBODIMENT

Next, a description will be given of an embodiment in accordance with the present invention with reference to the accompanying drawings.

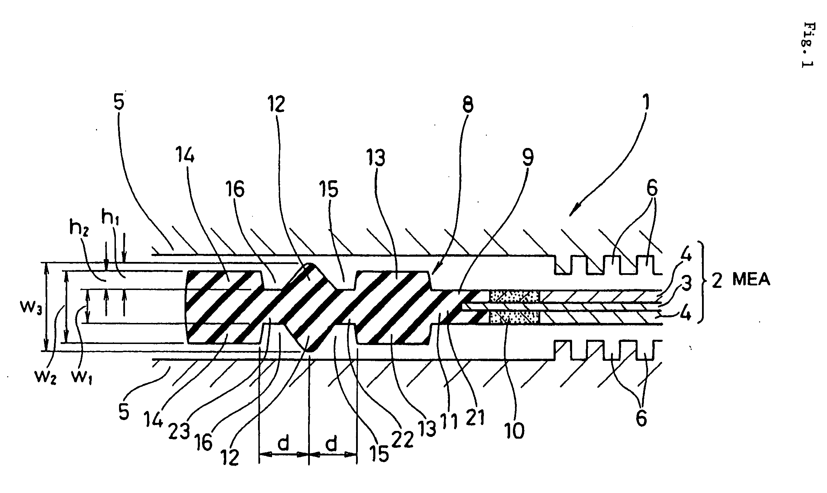

Fig. 1 shows a cross section of a main portion of a fuel battery cell 1 provided with a seal structure body 8 in accordance with an embodiment of the present invention, and the cell 1 is structured as follows.

In other words, a membrane electrode assembly (MEA) 2 is formed such that gas diffusion layers 4 are overlapped in both sides (both surface sides comprising an upper side and a lower side in the drawing) of an electrolyte membrane 3, and a pair of separators 5 are arranged in both sides of the MEA 2 so as to pinch the MEA 2. The seal structure body 8 in accordance with the embodiment is integrally held in an outer peripheral side (a left side in the drawing) of the MEA 2 so as to seal between a pair of separators 5, and is structured by a rubber-like elastic body (a gasket) shown by reference numeral 9 as a whole. A lot of groove-like concave portions 6 forming a gas flow path are provided in an inner surface of the separator 5.

The rubber-like elastic body 9 is provided over an entire periphery in an outer periphery of the MEA 2, a part of an inner peripheral position is impregnated in a peripheral edge portion of the gas diffusion layer 4 constituted by a porous material, thereby being integrally formed with the MEA 2, and the rubber-like elastic body 9 integrally has an elastic body layer (also called as a base plate portion) 11 integrally formed in an outer peripheral side thereof. The rubber is impregnated as a liquid-like rubber in the porous at a time of forming the rubber-like elastic body 9**.** The elastic body layer 11 is formed in a flat plate shape having an equal thickness to that of the MEA 2, and a seal lip 12 brought into close contact with an inner surface of the separator 5 and achieving a seal function is integrally formed in both surfaces of the elastic body layer 11 so as to amplify a partial thickness. Fixed sizing stop portions (also called as sub lips, rubber spacers or load receiving portions) 13 and 14 defining an interval between a pair of separators 5 at a time of assembling the stack are integrally formed respectively in both left and right sides, that is, an inner peripheral side and an outer peripheral side of the seal lip 12.

Since a long-term durability about the seal function is required in the seal lip 12, the seal lip 12 is formed in a shape generating a high surface pressure at a time of compression, in particular, is formed in a chevron cross sectional shape or a triangular shape, has a sharp tapered leading end portion, and sets a height h1 thereof higher than a height h2 of the fixed sizing stop portions 13 and 14 (h1 > h2).

On the other hand, each of the fixed sizing stop portions 13 and 14 is required to be controlled such that the seal lip 12 becomes a desired compression rate, that is, the seal lip 12 becomes a desired height with respect to a compression load, and is formed in such a shape that a deformation is hardly generated with respect to the compression load or is not generated absolutely. In particular, the fixed sizing stop portion is formed in a trapezoidal cross sectional shape or a quadrangular shape, has a flat leading end portion, and sets the height h2 thereof lower than the height h1 of the seal lip 12 (h2 < h1). Further, both the fixed sizing stop portions 13 and 14 are set at the same size h2, and the flat leading end portions are arranged on the same plane.

A hardness of the rubber-like elastic body 9 is set soft such as about 40 to 50 degree, and the compression rate of the seal lip 12 is set to about 30 to 50 %. Accordingly, groove-like space portions 15 and 16 serving as a rubber run-off portion are respectively set between the fixed sizing stop portions 13 and 14 in the inner peripheral side and the outer peripheral side of the seal lip 12 for allowing a compression deformation of the seal lip 12, however, it is desirable that volumetric capacities of the space portions 15 and 16 are as small as possible. Accordingly, the fixed sizing stop portions 13 and 14 function as a support, thereby being structured such as to suppress the lip collapse. A distance d between the leading end portion of the seal lip 12 and each of the fixed sizing stop portions 13 and 14 is roughly set to about 2 to 5 mm in an absolute size.

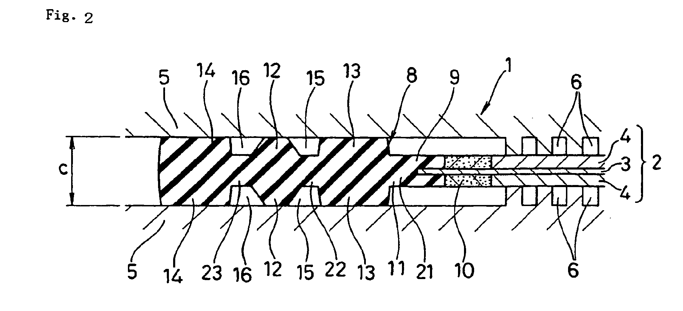

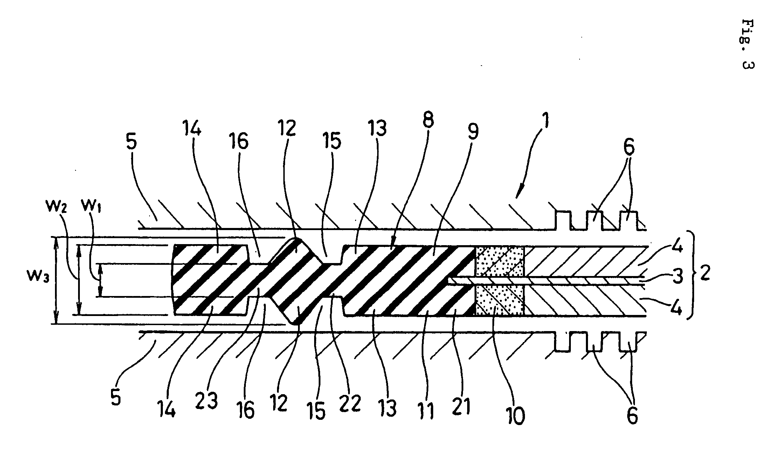

Fig. 1 shows an initial state before assembling a fuel battery stack. If a compression load in a thickness direction is applied to the seal structure body 8 by assembling the stack from the initial state, the seal lip 12 is pinched between a pair of separators 5 so as to be compression deformed, and is brought into close contact with the inner surface of the separator 5 on the basis of a reaction force thereof, as shown in Fig. 2. If the compression load is continuously applied and the separator 5 is brought into contact with the fixed sizing stop portions 13 and 14, an interval c between the separators 5 is defined because the fixed sizing stop portions 13 and 14 are formed in a shape which is not deformed with respect to the compression load. As a result, the compression rate of the seal lip 12 is controlled such as to sufficiently generate the seal function. At this time, the fixed sizing stop portions 13 and 14 function as a spacer which is pinched between a pair of separators 5 displacing in a direction of narrowing the interval c so as to stop the displacement. Accordingly, the seal structure body 8 can control the compression rate of the seal lip 12 by itself on the basis of the provision of the fixed sizing stop portions 13 and 14, thereby achieving the following effects.
(1) In other words, first, since the structure is not made such that the compression rate of the seal lip 51 is controlled by complicating the cross sectional shape of the separator 53 such as the prior art in Fig. 4 mentioned above, it is possible to simplify the cross sectional shape of the separator 5 so as to achieve the thin structure. As shown in Fig. 1, the inner surface of the separator 5 may be formed absolutely flat except the concave portion 6 forming position.
(2) Further, since the structure is not made such that the personal spacer is prepared such as the prior art in Fig. 5 mentioned above, it is possible to inhibit the number of the parts from being increased, and it is not necessary to execute the complicated parts adhering step. Further, in addition, the seal structure body 8 having the structure mentioned above achieves the following effects.
(3) Since the fixed sizing stop portions 13 and 14 are provided just adjacent to the seal lip 12, the fixed sizing stop portions 13 and 14 function as the support, whereby it is possible to inhibit the lip collapse from being generated.
(4) Since the fixed sizing stop portions 13 and 14 are formed as a part of the seal structure body 8 by the rubber-like elastic body 9, it is possible to make a rising degree of the stress at a time of the fixed sizing stop gentle in comparison with the case that they are formed by a hard material such as a hard resin or the like. Accordingly, it is possible to expect a parts breakage preventing effect on the basis of a buffering effect.
(5) Further, it is possible to expect a vibration preventing effect on the basis of a rubber elasticity after being assembled as the stack. The vibration preventing effect is an extremely important factor at a time when the fuel battery is used under a severe condition for being mounted on a vehicle. In this case, the structure of the seal structure body 8 in accordance with the embodiment mentioned above can be variously changed within a scope which can achieve the object of the present invention, and the seal structure body 8 may be structured, for example, as follows.
   (A) In the embodiment mentioned above, the structure is made such that the fixed sizing stop portions 13 and 14 are provided in both of the inner peripheral side and the outer peripheral side of the seal lip 12, however, the structure may be made such that the fixed sizing stop portions 13 and 14 are provided in only one of the inner peripheral side and the outer peripheral side.
   (B) In the embodiment mentioned above, the structure is made such that the fixed sizing stop portions 13 and 14 are provided over the entire periphery in both of the inner peripheral side and the outer peripheral side of the seal lip 12, however, the structure may be made such that the fixed sizing stop portions 13 and 14 are arranged in any one of the inner peripheral side and the outer peripheral side so as to be divided on the periphery (arranged by a plurality of sections at an interval on the periphery).
   (C) In the embodiment mentioned above, the structure is made such that the thickness of the elastic body layer 11 is set equal to the thickness of the MEA 2, and the seal lip 12 and the fixed sizing stop portions 13 and 14 are integrally formed in both front and back surfaces thereof so as to amplify the thickness of the elastic body layer 11, however, the structure may be made, as shown in Fig. 3, such that the thickness of the fixed sizing stop portions 13 and 14 is set equal to the thickness of the MEA 2, the thickness of the seal lip 12 is set larger, and the groove-like space portions 15 and 16 are formed between the seal lip 12 and the fixed sizing stop portions 13 and 14. In this case, in connection with the item (C), the structure of the seal structure body 8 in Fig. 1 can be described as follows. In other words, the fixed sizing stop portion 13 having a comparatively large thickness is integrally formed in the outer peripheral side of the impregnation layer 10 in the outer periphery of the MEA 2 via a coupling portion 21 having a comparatively small thickness, the seal lip 12 having a comparatively large thickness and being thicker than the fixed sizing stop portion 13 is integrally formed in the outer peripheral side of the fixed sizing stop portion 13 via a coupling portion 22 having a comparatively small thickness, and the fixed sizing stop portion 14 having a comparatively large thickness is integrally formed in further the outer peripheral side of the seal lip 12 via a coupling portion 23 having a comparatively small thickness.

Alternatively, the fixed sizing stop portion 13 having a larger thickness w2 than the coupling portion 21 is integrally formed in the outer peripheral side of the impregnation layer 10 in the outer periphery of the MEA 2 via the coupling portion 21 having an equal thickness w1 to that of the MEA 2 and the impregnation layer 10, the seal lip 12 having a larger thickness w3 than that of the fixed sizing stop portion 13 is integrally formed in the outer peripheral side of the fixed sizing stop portion 13 via the coupling portion 22 having a smaller thickness w1 than that of the fixed sizing stop portion 13, and the fixed sizing stop portion 14 having the thickness w2 which is larger than that of the coupling portion 23 and smaller than that of the seal lip 12 is integrally formed in further the outer peripheral side of the seal lip 12 via the coupling portion 23 having the smaller thickness w1 than that of the seal lip 12 (w1 < w2 < w3).

Further, the structure of the seal structure body 8 in Fig. 3 according to prior art can be described as follows. In other words, the fixed sizing stop portion 13 having a comparatively large thickness is integrally formed in the outer peripheral side of the impregnation layer 10 in the outer periphery of the MEA 2 via the coupling portion 21 having a comparatively large thickness, the seal lip 12 having a comparatively large thickness and being thicker than the fixed sizing stop portion 13 is integrally formed in the outer peripheral side of the fixed sizing stop portion 13 via the coupling portion 22 having a comparatively small thickness, and the fixed sizing stop portion 14 having a comparatively large thickness is integrally formed in further the outer peripheral side of the seal lip 12 via the coupling portion 23 having a comparatively small thickness.

Alternatively, the fixed sizing stop portion 13 having an equal thickness w2 to that of the coupling portion 21 is integrally formed in the outer peripheral side of the impregnation layer 10 in the outer periphery of the MEA 2 via the coupling portion 21 having an equal thickness w2 to that of the MEA 2 and the impregnation layer 10, the seal lip 12 having a larger thickness w3 than that of the fixed sizing stop portion 13 is integrally formed in the outer peripheral side of the fixed sizing stop portion 13 via the coupling portion 22 having a smaller thickness w1 than that of the fixed sizing stop portion 13, and the fixed sizing stop portion 14 having the thickness w2 which is larger than that of the coupling portion 23 and smaller than that of the seal lip is integrally formed in further the outer peripheral side of the seal lip 12 via the coupling portion 23 having the smaller thickness w1 than that of the seal lip 12 (w1 < w2 < w3).

## Claims

1. seal structure body for a fuel battery, the seal structure body (8) being arranged in an outer peripheral side of an MEA (2) constructing a fuel battery cell (1), sealing between a pair of separators (5) and made of a rubber-like elastic body (9), and the seal structure body (8) being integrally formed with said MEA (2) by impregnating a part of said rubber-like elastic body (9) in a peripheral edge portion of a gas diffusion layer (4) constructing said MEA (2), whereas a seal lip (12) closely contacted with said separator (5) so as to achieve a seal function is provided, and a sizing stop portion (13, 14) defining an interval (c) between said pair of separators (5) at a time of assembling a stack is integrally formed in at least one or both of an inner peripheral side and an outer peripheral side of said seal lip (12), whereas groove-like space portions (15, 16) serving as a rubber run-off portion are respectively set between the fixed sizing stop portions (13, 14) in the inner peripheral side and the outer peripheral side of the seal lip (12), **CHARACTERIZED IN THAT,** the fixed sizing stop portion (13) having a larger thickness (w2) than a coupling portion (21) is integrally formed in the outer peripheral side of an impregnation layer (10) in the outer periphery of the MEA (2) via the coupling portion (21) having an equal thickness (w1) to that of the MEA (2) and the impregnation layer (10), the seal lip (12) having a larger thickness (w3) than that of the fixed sizing stop portion (13) is integrally formed in the outer peripheral side of the fixed sizing stop portion (13) via the coupling portion (22) having a smaller thickness (w1) than that of the fixed sizing stop portion (13), and the fixed sizing stop portion (14) having the thickness (w2) which is larger than that of a coupling portion (23) and smaller than that of the seal lip (12) is integrally formed in further the outer peripheral side of the seal lip (12) via the coupling portion (23) having the smaller thickness (w1) than that of the seal lip (12).

## Patentansprüche

1. Dichtungsanordnungskörper für eine Brennstoffzelle, wobei der Dichtungsanordnungskörper (8) in einer äußeren Umfangsseite einer eine Brennstoffzelle (1) bildenden MEA *(Membran-Elektroden-Einheit)* (2) als Abdichtung zwischen einem Paar Separatoren (5) angeordnet ist und aus einem gummiähnlichen elastischen Körper (9) besteht, und wobei der Dichtungsanordnungskörper (8) durch Imprägnierung eines Teils des gummiähnlichen elastischen Körpers (9) in einem Umfangskantenabschnitt einer die MEA (2) bildenden Gasdiffusionsschicht (4) integral mit der MEA (2) ausgebildet ist, wobei eine Dichtungslippe (12) in engem Kontakt mit dem Separator (5) steht, um so eine Dichtungsfunktion bereitzustellen, und wobei ein Größenbegrenzungsabschnitt (13, 14), der zu einem Zeitpunkt der Stapelmontage einen Abstand (c) zwischen dem Paar Separatoren (5) definiert, mindestens in einer inneren Umfangsseite und/oder einer äußeren Umfangsseite der Dichtungslippe (12) integral ausgebildet ist, wobei nutähnliche Abstandsabschnitte (15, 16), die als ein Gummiablaufabschnitt dienen, jeweils zwischen den festen Größenbegrenzungsabschnitten (13, 14) in der inneren Umfangsseite und der äußeren Umfangsseite der Dichtungslippe (12) festgelegt sind, **dadurch gekennzeichnet, dass** der feste Größenbegrenzungsabschnitt (13), der eine größere Dicke (w2) als ein Kopplungsabschnitt (21) aufweist, in der äußeren Umfangsseite einer Imprägnierungsschicht (10) im äußeren Umfang der MEA (2) über den Kopplungsabschnitt (21) integral ausgebildet ist, der eine gleiche Dicke (w1) wie diejenige der MEA (2) und der Imprägnierungsschicht (10) aufweist, wobei die Dichtungslippe (12), die eine größere Dicke (w3) als diejenige des festen Größenbegrenzungsabschnitts (13) aufweist, in der äußeren Umfangsseite des festen Größenbegrenzungsabschnitts (13) über den Kopplungsabschnitt (22) integral ausgebildet ist, der eine geringere Dicke (w1) als diejenige des festen Größenbegrenzungsabschnitts (13) aufweist, und wobei der feste Größenbegrenzungsabschnitt (14), der die Dicke (w2) aufweist, die größer als diejenige eines Kopplungsabschnitts (23) und geringer als diejenige der Dichtungslippe (12) ist, weiterhin in der äußeren Umfangsseite der Dichtungslippe (12) über den Kopplungsabschnitt (23) integral ausgebildet ist, der die geringere Dicke (w1) als diejenige der Dichtungslippe (12) aufweist.

## Revendications

1. Corps de structure de joint pour pile à combustible, le corps (8) de structure de joint étant disposé d'un côté périphérique extérieur d'un MEA (2) constituant une cellule (1) de pile à combustible, assurant une étanchéité entre une paire d'intercalaires (5), et constitué d'un corps élastique caoutchouteux (9), et le corps (8) de structure de joint étant formé d'un seul tenant avec ledit MEA (2) en imprégnant avec une partie dudit corps élastique caoutchouteux (9) une partie de bord périphérique d'une couche (4) de diffusion gazeuse constituant ledit MEA (2), tandis qu'un rebord (12) d'étanchéité en contact rapproché avec ledit intercalaire (5) de façon à remplir une fonction d'étanchéité est prévu, et qu'une partie (13, 14) de butée de dimensionnement définissant un intervalle (c) entre ladite paire d'intercalaires (5) au moment de l'assemblage d'une batterie est formée d'un seul tenant sur le côté périphérique intérieur et / ou le côté périphérique extérieur dudit rebord (12) d'étanchéité, tandis que des parties (15, 16) d'évidement en rainures servant de parties de dégagement du caoutchouc sont respectivement ménagées entre les parties fixes (13, 14) de butées de dimensionnement sur le côté périphérique intérieur et le côté périphérique extérieur dudit rebord (12) d'étanchéité, **CARACTÉRISÉ EN CE QUE** la partie fixe (13) de butée de dimensionnement présente une épaisseur (w2) supérieure à celle d'une partie (21) de couplage est formée d'un seul tenant sur le côté périphérique extérieur d'une couche (10) d'imprégnation à la périphérie extérieure du MEA (2) via la partie (21) de couplage présentant une épaisseur (w1) égale à celle du MEA (2) et de la couche (10) d'imprégnation, **en ce que** le rebord (12) d'étanchéité présentant une épaisseur (w3) supérieure à celle de la partie fixe (13) de butée de dimensionnement est formé d'un seul tenant sur le côté périphérique extérieur de la partie fixe (13) de butée de dimensionnement via la partie (22) de couplage présentant une épaisseur (w1) inférieure à celle de la partie fixe (13) de butée de dimensionnement, et **en ce que** la partie fixe (14) de butée de dimensionnement présentant l'épaisseur (w2) supérieure à celle d'une partie (23) de couplage et inférieure à celle du rebord (12) d'étanchéité est en outre formée d'un seul tenant sur le côté périphérique extérieur du rebord (12) d'étanchéité via la partie (23) de couplage présentant l'épaisseur (w1) inférieure à celle du rebord (12) d'étanchéité.
